(19) Europäisches Patentamt
European Patent Office
Office européen des brevets

(11) **EP 3 877 107 B1**

(12) **EUROPÄISCHE PATENTSCHRIFT**

(45) Veröffentlichungstag und Bekanntmachung des Hinweises auf die Patenterteilung:
**18.10.2023** Patentblatt **2023/42**

(21) Anmeldenummer: **19800977.1**

(22) Anmeldetag: **05.11.2019**

(51) Internationale Patentklassifikation (IPC):
*B22F 12/90* (2021.01)    *B22F 10/37* (2021.01)
*B33Y 50/02* (2015.01)    *B22F 3/105* (2006.01)
*B22F 10/28* (2021.01)    *B33Y 10/00* (2015.01)

(52) Gemeinsame Patentklassifikation (CPC):
**B33Y 50/02; B22F 10/37; B22F 12/90;** B22F 10/28;
B33Y 10/00; Y02P 10/25

(86) Internationale Anmeldenummer:
**PCT/EP2019/080299**

(87) Internationale Veröffentlichungsnummer:
**WO 2020/094672 (14.05.2020 Gazette 2020/20)**

(54) **VERFAHREN ZUM BETREIBEN EINER FERTIGUNGSEINRICHTUNG UND FERTIGUNGSEINRICHTUNG ZUM ADDITIVEN FERTIGEN EINES BAUTEILS AUS EINEM PULVERMATERIAL**

METHOD FOR OPERATING A MANUFACTURING DEVICE AND MANUFACTURING DEVICE FOR THE ADDITIVE MANUFACTURING OF A COMPONENT FROM A POWDER MATERIAL

PROCÉDÉ POUR FAIRE FONCTIONNER UN DISPOSITIF DE FABRICATION ET DISPOSITIF DE FABRICATION POUR LA FABRICATION ADDITIVE D'UNE PIÈCE À PARTIR D'UN MATÉRIAU PULVÉRULENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2018 DE 102018218991**

(43) Veröffentlichungstag der Anmeldung:
**15.09.2021** Patentblatt **2021/37**

(73) Patentinhaber: **TRUMPF Laser- und Systemtechnik GmbH**
**71254 Ditzingen (DE)**

(72) Erfinder:
• **WAGENBLAST, Philipp**
**71229 Leonberg (DE)**
• **PIEGER, Markus**
**73240 Wendlingen am Neckar (DE)**
• **SCHAAL, Frederik**
**70734 Fellbach (DE)**
• **ALLENBERG-RABE, Matthias**
**71640 Ludwigsburg (DE)**
• **ULLMANN, Björn**
**71636 Ludwigsburg (DE)**
• **BLICKLE, Valentin**
**70190 Stuttgart (DE)**
• **GRONLE, Marc**
**70567 Stuttgart (DE)**

(74) Vertreter: **Trumpf Patentabteilung**
**Trumpf GmbH & Co KG**
**TH550 Patente und Lizenzen**
**Johann-Maus-Straße 2**
**71254 Ditzingen (DE)**

(56) Entgegenhaltungen:
**WO-A1-2017/085468    US-A1- 2015 177 158**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betreiben einer pulverbettbasierten Fertigungseinrichtung zum additiven Fertigen eines Bauteils aus einem Pulvermaterial, sowie eine Fertigungseinrichtung, die eingerichtet ist zur Durchführung eines solchen Verfahrens.

Bei einer solchen Fertigungseinrichtung wird Pulvermaterial einem Speisebehälter entnommen und einem Bauort, beispielsweise einer Bauplattform, an dem ein Bauteil additiv aus dem Pulvermaterial gefertigt wird, zugeführt. Insbesondere wird an dem Bauort ein Pulverbett aus dem Pulvermaterial gebildet. Dabei ist es wichtig, dass eine an dem Bauort angeordnete Arbeitspulverschicht defektfrei, insbesondere vollständig und möglichst homogen ist. Zu Beginn eines Fertigungsvorgangs können Defekte einer insbesondere initial aufgetragenen Arbeitspulverschicht an dem Bauort aus einer ungeeigneten Topografie einer Deckschicht des Pulvermaterials in dem Speisebehälter resultieren, beispielsweise, weil diese Deckschicht nicht eben ist, sondern zum Beispiel die Geometrie eines Schüttkegels aufweist. Während des Fertigungsprozesses können Defekte in der Arbeitspulverschicht insbesondere aus einer zu geringen Pulverdosierung, einer Verdrängung der Arbeitspulverschicht durch Teile des entstehenden Bauteils, beispielsweise Kanten von aufgeschmolzenem Metall und/oder Schmauchpartikel, die hochstehen, aus Metallspritzern oder daraus resultieren, dass gesintertes Material unterhalb der neu aufgetragenen Arbeitspulverschicht eine höhere Dichte, das heißt insbesondere eine höhere Kompaktierung aufweist als das Pulvermaterial, sodass bereichsweise Pulver in Richtung der darunterliegenden Schichten nachrutscht. Um dies zu kompensieren, muss dann mehr Pulvermaterial in der neuen Arbeitspulverschicht aufgetragen werden, insbesondere umso mehr Pulvermaterial, als Fläche in einer darunterliegenden Schicht aufgeschmolzen wurde. Aus den genannten Gründen ist es wichtig, das sogenannte Pulverbett, das heißt die an dem Bauort aufgetragene Arbeitspulverschicht, möglichst genau zu überwachen.

Aus US 2015/177158 ist ein Verfahren nach dem Oberbegriff des Anspruchs 1 bekannt.

Aus der WO 2017/085468 A1 geht ein Verfahren zum optischen Überwachen einer solchen Arbeitspulverschicht hervor, wobei hier summarisch Unterschiede zwischen aufgenommenen Bildern aufeinanderfolgender Pulvermaterialschichten ermittelt, oder Zeilen und/oder Spalten der Bilder betrachtet werden, wobei Letzteres zu dem Zweck durchgeführt wird, Fehler an einem Fördermechanismus zum Fördern des Pulvermaterials aus dem Speisebehälter an den Bauort, insbesondere Defekte eines Pulverschiebers, festzustellen. Eine lokale Beurteilung der Arbeitspulverschicht ist auf diese Weise nicht möglich. Darüber hinaus ist das Verfahren sehr kompliziert und rechenaufwändig.

Der Erfindung liegt die Aufgabe zugrunde, ein Verfahren zum Betreiben einer pulverbettbasierten Fertigungseinrichtung sowie eine Fertigungseinrichtung zum additiven Fertigen eines Bauteils aus einem Pulvermaterial zu schaffen, wobei die genannten Nachteile nicht auftreten.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Verfahren zum Betreiben einer pulverbettbasierten Fertigungseinrichtung zum additiven Fertigen eines Bauteils aus einem Pulvermaterial geschaffen wird, wobei wenigstens eine optische Aufnahme, das heißt insbesondere ein Bild, einer Arbeitspulverschicht eines Pulvermaterials an einem Bauort der Fertigungseinrichtung angefertigt wird. Die wenigstens eine optische Aufnahme wird lokal ausgewertet, wobei die Arbeitspulverschicht anhand der Auswertung der optischen Aufnahme auf lokale Beschichtungsfehler untersucht wird. Diese Vorgehensweise erlaubt eine lokale Auswertung der Arbeitspulverschicht und deren Beurteilung in Hinblick auf mögliche Defekte. Darüber hinaus kann das hier vorgeschlagene Verfahren - was im Folgenden erläutert wird - in vergleichsweise einfacher und wenig rechenaufwändiger Weise durchgeführt werden.

Unter einem additiven Fertigen ist insbesondere ein generatives Fertigen eines Bauteils zu verstehen. Insbesondere wird darunter ein schichtweises Aufbauen eines Bauteils aus Pulvermaterial verstanden, insbesondere ein Fertigungsverfahren, das ausgewählt ist aus einer Gruppe, bestehend aus einem selektiven Lasersintern, einem Laser-Metall-Fusionieren (Laser Metal Fusion - LMF), einem selektiven Plasmasintern, einem Elektronenstrahlschmelzen (Electron Beam Melting - EBM), einem direkten Metall-Laser-Schmelzen (Direct Metal Laser Melting - DMLM), einem 3D-Drucken, und einem Elektronenstrahlsintern.

Unter einer Arbeitspulverschicht wird insbesondere eine Pulverschicht verstanden, in der an dem Bauort eine neue Schicht des zu erzeugenden Bauteils erzeugt wird. Die Arbeitspulverschicht wird auch als Pulverbett bezeichnet.

Unter einem Bauort wird insbesondere derjenige Ort der Fertigungseinrichtung verstanden, an dem aus dem Pulvermaterial das entstehende Bauteil gebildet wird. Hierbei kann es sich insbesondere um eine Bauplattform der Fertigungseinrichtung handeln.

Dass die wenigstens eine optische Aufnahme lokal ausgewertet wird, bedeutet vorzugsweise, dass sie pixelweise oder pixelgruppenweise ausgewertet wird. Unter einer Pixelgruppe ist dabei ein beschränkter Bereich der optischen Aufnahme zu verstehen, der in Richtung beider Bildkoordinaten der zweidimensionalen Aufnahme beschränkt ist. Eine lokale Auswertung ist also insbesondere eine Auswertung in einem Bildbereich, der in beiden Bildkoordinaten beschränkt ist. Somit ist eine lokale Auswertung insbesondere keine Auswertung, die eine gesamte Spalte oder eine gesamte Zeile der optischen Aufnahme betrifft. Weiterhin ist eine lokale Auswertung keine Auswertung, die global die gesamte Aufnahme einbezieht. Bevorzugt wird die gesamte optische Aufnahme lokal ausgewertet, wobei dies bedeutet, dass sie Stelle für Stelle ausgewertet wird, nicht jedoch global summarisch. Eine Pixelgruppe oder ein lokaler Auswertungsbereich ist vorzugsweise begrenzt auf einen Bildbereich, der in jeder Bildkoordinate eine einstellige Anzahl von Pixeln oder höchstens eine geringe zweistellige Anzahl von Pixeln, insbesondere mindestens 5 Pixel bis höchstens 11 Pixel, oder mindestens 9 Pixel bis höchstens 21 Pixel, einschließt, wobei die Pixelzahl in jeder Bildkoordinate bevorzugt ungerade ist. Auch größere Pixelgruppen oder lokale Auswertebereiche sind möglich, wobei die lokale Auflösung mit der Größe der Pixelgruppe oder des lokalen Auswertebereichs abnimmt.

Gemäß einer Weiterbildung der Erfindung ist vorgesehen, dass ein lokaler Beschichtungsfehler, auf den die Arbeitspulverschicht anhand der Auswertung der optischen Aufnahme untersucht wird, ausgewählt ist aus einer Gruppe, bestehend aus einem mangelbeschichteten Bereich, einem ungleichmäßig beschichteten Bereich, einem unbeschichteten Bereich, und einer Abrisskante. Ein mangelbeschichteter Bereich ist dabei ein Bereich, in dem - gemessen an einer Soll-Auftragsmenge - zu wenig Pulvermaterial aufgetragen ist. Ein ungleichmäßig beschichteter Bereich weist - im Vergleich zu einer Soll-Homogenität der Arbeitspulverschicht - eine zu wenig gleichmäßige Beschichtung auf. Ein unbeschichteter Bereich ist ein Bereich, in dem fehlerhaft kein Pulvermaterial aufgetragen ist. Eine Abrisskante ist ein Bereich, in welchem die Beschichtung mit Pulvermaterial fehlerhaft endet. Allgemein ist ein Beschichtungsfehler insbesondere ein Defekt in der Beschichtung des Bauorts mit Pulvermaterial.

Ein mangelbeschichteter Bereich kann beispielsweise entstehen, wenn neu aufgetragenes Pulvermaterial in aufgeschmolzene Bereiche unterhalb der neuen Arbeitspulverschicht nachrutscht, weil die aufgeschmolzenen Bereiche ein geringeres Volumen aufweisen als das unaufgeschmolzene Pulvermaterial. Ein unbeschichteter Bereich kann insbesondere durch hochstehende Teile aus unter der Arbeitspulverschicht angeordneten Schichten resultieren, beispielsweise Kanten von aufgeschmolzenem Metall, Schmauchpartikel oder Metallspritzer. Ein ungleichmäßig beschichteter Bereich kann beispielsweise durch Fehler oder Defekte in einem Fördermechanismus entstehen, der zur Förderung von Pulvermaterial aus dem Speisebehälter an den Bauort eingerichtet ist. Eine Abrisskante entsteht insbesondere dort, wo ein beschichteter Bereich und ein unbeschichteter Bereich aneinandergrenzen. Die Beschichtungsfehler können auch aus einer unzulänglichen Topografie einer Deckschicht des Pulvermaterials in dem Speisebehälter resultieren, insbesondere bei einem initialen Auftrag der Arbeitspulverschicht vor Beginn der eigentlichen Bauteilfertigung. Dabei kann insbesondere dann, wenn die Deckschicht des Pulvermaterials einem Schüttkegel folgt, zu wenig Pulvermaterial durch den Fördermechanismus an den Bauort gefördert werden, sodass mangelbeschichtete Bereiche und/oder unbeschichtete Bereiche auftreten.

Erfindungsgemäß ist vorgesehen, dass die wenigstens eine optische Aufnahme mit einer Auflösung aufgenommen wird, die im Verhältnis zu einer mittleren Pulverkorngröße des Pulvermaterials so gewählt wird, dass Helligkeitsvariationen in einzelnen Pixeln der optischen Aufnahme aufgrund lokal verschiedener Anordnung der Pulverkörner feststellbar sind. Die lokal verschiedene Anordnung der Pulverkörner wird als Pulver-Mikrostruktur bezeichnet; die daraus resultierenden Helligkeitsvariationen in einzelnen Pixeln der optischen Aufnahme werden als Bild-Mikrostruktur bezeichnet. Die zuvor genannte Wahl der Auflösung bedeutet insbesondere, dass die Auflösung so hoch ist, dass sich die optischen Streuungen einzelner Partikel über einen Pixel nicht ausmitteln. Auf diese Weise kann vorteilhaft die lokale Bild-Mikrostruktur, das heißt das lokale Abbildungsrauschen, das aus der Pulver-Mikrostruktur resultiert, ausgewertet werden, insbesondere um im Vergleich von optischen Aufnahmen aufeinander folgender Arbeitspulverschichten neu beschichtete Bereiche von unbeschichteten oder mangelbeschichteten Bereichen unterscheiden zu können. Es hat sich nämlich herausgestellt, dass sich die lokale Bild-Mikrostruktur bei einer Neubeschichtung, also einem Neuauftrag der Arbeitspulverschicht, aufgrund der Umsortierung der einzelnen Pulverkörner, das heißt insbesondere einer geänderten Pulver-Mikrostruktur der neuen Arbeitspulverschicht im Vergleich zu der vorhergehenden Arbeitspulverschicht, ändert. Dagegen bleibt die Bild-Mikrostruktur in Bereichen, die nicht oder mangelhaft beschichtet wurden, konstant oder nahezu konstant, weil hier die Pulverkörner ihre Orientierung zumindest zu einem relevanten Teil beibehalten. Wird die Auflösung nun so gewählt, dass sich diese Effekte über einen Pixel der Aufnahme nicht ausmitteln, erlaubt eine insbesondere pixelweise oder pixelgruppenweise Analyse der Bild-Mikrostruktur die Feststellung, ob ein in einem einzelnen Pixel oder einer Pixelgruppe abgebildeter Bereich neu beschichtet wurde, oder ob hier ein unbeschichteter Bereich oder ein mangelbeschichteter Bereich vorliegt.

Von der Bild-Mikrostruktur und dem Abbildungsrauschen zu unterscheiden ist ein aufnahmesystembedingtes Bildrauschen, beispielsweise Sensorrauschen, Ausleserauschen oder dergleichen, das hier nicht betrachtet wird.

Bevorzugt wird im Rahmen des Verfahrens auch die Informationstiefe der Helligkeit, insbesondere also eine Anzahl von Bits, mit denen die Helligkeit quantifiziert wird, so gewählt, dass entsprechende Helligkeitsvariationen feststellbar sind.

Unter einer mittleren Pulverkorngröße des Pulvermaterials wird hier insbesondere ein mittlerer Äquivalentdurchmesser des Pulvermaterials verstanden, wobei grundsätzlich verschiedene Messmethoden zur Feststellung einer Korngrößenverteilung in dem Pulvermaterial und insbesondere des mittleren Äquivalentdurchmessers verwendet werden können. Hierauf kommt es letztlich nicht wesentlich an. Wichtig ist nur, dass die Auflösung der optischen Aufnahme so gewählt wird, dass letztlich die zuvor erläuterten Helligkeitsvariationen festgestellt und somit die im Rahmen einer Neubeschichtung geänderte lokale Bild-Mikrostruktur ausgewertet werden kann. Eine mittlere Pulverkorngröße von beispielsweise Aluminiumpulver kann beispielsweise 10 $\mu$m bis 53 $\mu$m betragen.

Gemäß einer Weiterbildung der Erfindung ist vorgesehen, dass anhand von festgestellten Beschichtungsfehlern auf eine Topografie einer Deckschicht des Pulvermaterials in dem Speisebehälter geschlossen wird. Mittels der Überwachung der Arbeitspulverschicht können somit Rückschlüsse auf die Topografie der Deckschicht in dem Speisebehälter gezogen werden. Insbesondere kann aus einer unvollständigen Pulverbeschichtung an dem Bauort und/oder aus der Art der unvollständigen Pulverbeschichtung auf eine bestimmte Topografie der Deckschicht in dem Speisebehälter geschlossen werden, beispielsweise auf ein Loch oder einen Schüttkegel. Es bedarf in diesem Fall keines direkten Messsystems, welches die Deckschicht in dem Speisebehälter beurteilt. Vorzugsweise werden dann auf der Grundlage der festgestellten Beschichtungsfehler und/oder der zurückgeschlossenen Topografie der Deckschicht Maßnahmen getroffen, um die Topografie der Deckschicht einer vorherbestimmten Soll-Topografie anzunähern. Das Schließen von festgestellten Beschichtungsfehlern auf die Topografie der Deckschicht wird bevorzugt vor einem Beginn einer Fertigung eines Bauteils durchgeführt, insbesondere initial, um zu gewährleisten, dass bei Beginn der eigentlichen Fertigung eine geeignete Deckschicht-Topografie in dem Speisebehälter vorliegt, und somit eine fehlerfreie Ausprägung der Arbeitspulverschicht möglich ist. Beispielsweise kann der Fördermechanismus gezielt angesteuert werden, um die Topografie der Deckschicht in dem Speisebehälter der vorherbestimmten Soll-Topografie, insbesondere einer ebenen Topografie, anzunähern.

Gemäß einer Weiterbildung der Erfindung ist vorgesehen, dass die Arbeitspulverschicht im laufenden Betrieb der Fertigungseinrichtung beim schichtweisen Aufbau eines Bauteils auf Beschichtungsfehler untersucht wird. Somit können Fehler beim Aufbau des Bauteils vermieden werden. Besonders bevorzugt wird jede neue Arbeitspulverschicht auf Beschichtungsfehler untersucht. Vorzugsweise werden Maßnahmen eingeleitet, um Beschichtungsfehler zu beseitigen, wenn ein Beschichtungsfehler detektiert wurde. Dabei kann insbesondere ein Nachbeschichten der Arbeitspulverschicht oder ein Neubeschichten der Arbeitspulverschicht durchgeführt werden, insbesondere solange, bis die Arbeitspulverschicht keine Beschichtungsfehler mehr aufweist.

Gemäß einer Weiterbildung der Erfindung ist vorgesehen, dass eine erste optische Aufnahme einer ersten Arbeitspulverschicht mit einer zweiten optischen Aufnahme einer zweiten, - insbesondere unmittelbar - vorhergehenden Arbeitspulverschicht verglichen wird, wobei die erste Arbeitspulverschicht anhand des Vergleichs der ersten optischen Aufnahme mit der zweiten optischen Aufnahme auf lokale Beschichtungsfehler untersucht wird. Durch den Vergleich wird bevorzugt ein Vergleichsbild erhalten, wobei vorzugsweise das Vergleichsbild lokal auf Merkmale von Beschichtungsfehlern hin untersucht wird. Auf diese Weise kann inkrementell oder differentiell festgestellt werden, ob aufeinanderfolgende Arbeitspulverschichten Beschichtungsfehler aufweisen, wobei insbesondere festgestellt werden kann, ob sich zwischen der zunächst aufgenommenen zweiten optischen Aufnahme zu der später aufgenommenen ersten optischen Aufnahme die lokale Bild-Mikrostruktur verändert hat. Wie zuvor bereits ausgeführt, ändert eine vollständige Neubeschichtung die lokale Bild-Mikrostruktur, wobei mangelbeschichtete oder unbeschichtete Bereiche insbesondere dadurch identifiziert werden können, dass sich die lokale Bild-Mikrostruktur in geringerem Maße oder gar nicht geändert hat. Die zweite Arbeitspulverschicht ist bevorzugt eine Arbeitspulverschicht aus einem unmittelbar vorangehenden Bauschritt zur Fertigung des Bauteils, wobei im Rahmen des Verfahrens bevorzugt fortlaufend von jeder neuen Arbeitspulverschicht eine optische Aufnahme angefertigt und mit der unmittelbar vorangehenden optischen Aufnahme der unmittelbar vorangehenden Arbeitspulverschicht verglichen wird.

Die erste optische Aufnahme und die zweite optische Aufnahme werden bevorzugt miteinander korreliert. Insbesondere werden die erste optische Aufnahme und die zweite optische Aufnahme vorzugsweise lokal, insbesondere pixelweise, miteinander multipliziert, dividiert, voneinander subtrahiert, und/oder gemäß einer komplexeren Funktion miteinander verrechnet.

Erfindungsgemäß ist vorgesehen, dass ein Beschichtungsfehler lokal an einer Stelle detektiert wird, an der ein Unterschied zwischen der ersten optischen Aufnahme und der zweiten optischen Aufnahme kleiner ist als ein vorbestimmter Grenzunterschied, oder an der ein solcher Unterschied nicht vorhanden ist. Wie bereits erläutert, führt eine erfolgreiche Neubeschichtung oder ein Neuauftrag der Arbeitspulverschicht zu lokalen Unterschieden zwischen den optischen Aufnahmen der vorhergehenden Arbeitspulverschicht und der neuen Arbeitspulverschicht, insbesondere in der lokalen Bild-Mikrostruktur, wobei dort, wo ein entsprechender Unterschied klein oder nicht vorhanden ist, auf einen lokalen Beschichtungsfehler geschlossen werden kann.

Erfindungsgemäß ist vorgesehen, dass die erste optische Aufnahme - insbesondere lokal - mit der zweiten optischen Aufnahmen korreliert wird, wobei ein Korrelationsbild erzeugt wird, wobei das Korrelationsbild auf lokale Beschichtungsfehler untersucht wird. Auf diese Weise kann eine lokale Korrelation zwischen den beiden optischen Aufnahmen ausgewertet und in Hinblick auf Beschichtungsfehler untersucht werden. Ein geringes Maß an Korrelation in dem Korrelationsbild deutet dabei auf eine fehlerfreie Ausbringung der neuen Arbeitspulverschicht hin, während ein hohes Maß an Korrelation in dem Korrelationsbild auf einen mangelbeschichteten Bereich oder auf einen unbeschichteten Bereich hindeutet.

Gemäß einer Weiterbildung der Erfindung ist vorgesehen, dass die erste optische Aufnahme - insbesondere lokal - mit der zweiten optischen Aufnahme korreliert wird, indem a) die erste optische Aufnahme und die zweite optische Aufnahme pixelweise miteinander multipliziert werden, wobei hieraus ein Multiplikationsbild erhalten wird, wobei b) die erste optische Aufnahme pixelweise quadriert wird, woraus ein erstes Potenzbild erhalten wird, wobei c) die zweite optische Aufnahme pixelweise quadriert wird, woraus ein zweites Potenzbild erhalten wird, und wobei d) das Multiplikationsbild, das erste Potenzbild und das zweite Potenzbild jeweils - für sich genommen - lokal gemittelt werden, sodass ein gemitteltes Multiplikationsbild, ein gemitteltes erste Potenzbild und ein gemitteltes zweites Potenzbild erhalten werden. Dabei wird e) ein Korrelationsbild erhalten durch Division des gemittelten Multiplikationsbilds durch die Quadratwurzel aus dem Produkt des gemittelten ersten Potenzbilds mit dem gemittelten zweiten Potenzbild.

Wird dabei mit A die erste optische Aufnahme und mit B die zweite optische Aufnahme bezeichnet, sowie die Mittelung mit dem Klammersymbol < >, ergibt sich das Korrelationsbild C gemäß der folgenden Funktion:

$$C = \frac{<AB>}{\sqrt{<A^2><B^2>}} \; . \qquad (1)$$

Die einzelnen Rechenoperationen, das heißt insbesondere die Multiplikationen/Quadrierungen der optischen Aufnahmen, die lokalen Mittelungen, sowie die Division, die Produktbildung und das Ziehen der Quadratwurzel in dem Schritt e) werden bevorzugt pixelweise durchgeführt.

Die Korrelationsfunktion gemäß Gleichung (1) hat den Vorteil, dass sich ein lediglich globaler Helligkeitsunterschied zwischen den optischen Aufnahmen nicht auswirkt. Sei beispielsweise die erste optische Aufnahme A von der zweiten optischen Aufnahme B lediglich durch einen globalen Helligkeitsfaktor h verschieden, sodass B = h · A, so erhält man durch Vorziehen des Vorfaktors h:

$$C = \frac{h<AA>}{h\sqrt{<A^2><A^2>}} = 1 \; . \qquad (2)$$

Das Korrelationsbild C verhält sich in diesem Fall also, als wenn die optischen Aufnahme A, B identisch wären.

Dagegen wirken sich aber lokale Unterschiede, insbesondere Helligkeitsvariationen, in dem Korrelationsbild aus, wobei aus der Cauchy-Schwarzschen Ungleichung folgt, dass der Wert des Korrelationsbilds C für bis auf einen globalen Helligkeitsunterschied identische Pixel = 1 ist, wobei der Wert umso kleiner ist, je weniger die betrachteten Pixel miteinander korreliert sind. Somit kann vorteilhaft anhand des Korrelationsbilds C erkannt werden, in welchen Bereichen keine fehlerfreie Neubeschichtung des Bauorts erfolgt ist, wobei sich mangelbeschichtete Bereiche und unbeschichtete Bereiche durch Werte nahe 1 in dem Korrelationsbild auszeichnen, während fehlerfrei neubeschichtete Bereiche geringere Werte aufweisen.

Die lokale Mittelung der einzelnen Bilder erfolgt insbesondere pixelweise für jeden Pixel, wobei die Mittelung bevorzugt über einen beschränkten Pixelbereich in der Umgebung des jeweils betrachteten Pixels erfolgt. Dieser Pixelbereich ist bevorzugt für jeden Pixel sowie für alle Bilder derselbe. Insbesondere kann die Mittelung über einen Bereich durchgeführt werden, der in beiden Bildkoordinaten eine Ausdehnung von einer einstelligen Anzahl von Pixeln oder einer niedrigen zweistelligen Anzahl von Pixeln, insbesondere von mindestens fünf Pixeln bis höchstens elf Pixeln, vorzugsweise von mindestens sieben Pixeln bis höchstens einundzwanzig Pixeln, vorzugsweise von neun Pixeln aufweist, wobei der Pixelbereich besonders bevorzugt quadratisch gewählt wird, insbesondere mit einer Kantenlänge von neun Pixeln. Dabei ist besonders bevorzugt vorgesehen, dass der betrachtete Pixel, über dessen Umgebung die Mittelung durchgeführt wird, ein zentraler Pixel dieses Pixelbereichs ist. Der betrachtete Pixel kann aber auch als Rand- oder Eckpixel des Pixelbereichs definiert werden. Es sind auch größere oder kleinere Pixelbereiche möglich.

Es ist möglich, dass für Pixel an Rändern der optischen Aufnahmen andere Pixelbereiche - jedoch vorzugsweise mit identischer Pixelanzahl - gewählt werden, da Randpixel einseitig und Eckpixel zweiseitig keine unmittelbaren nächsten Nachbarn aufweisen.

Insbesondere kann mit der hier vorgeschlagenen Methode eine Änderung der Bild-Mikrostruktur zwischen der ersten optischen Aufnahme und der zweiten optischen Aufnahme ausgewertet werden. Insbesondere wird mithilfe des Verfahrens in einem lokalen Bereich um einen Pixel herum geprüft, ob die optischen Aufnahmen einander ähnlich sind.

Das hier vorgeschlagene Verfahren funktioniert mit sehr guten Ergebnissen sogar für sehr dünne Arbeitspulverschichten mit Schichtdicken von höchstens 100 μm, vorzugsweise mit Schichtdicken von höchstens 60 μm, vorzugsweise mit Schichtdicken von höchstens 40 μm, aber auch kleinere Schichtdicken. Somit können mithilfe des Verfahrens hier insbesondere auch mangelbeschichtete oder unbeschichtete Bereiche, allgemein Defekte oder Beschichtungsfehler, automatisch detektiert werden, die mit bloßem Auge nicht mehr zu erkennen sind.

Die Aufgabe wird auch gelöst, indem eine insbesondere pulverbettbasierte Fertigungseinrichtung geschaffen wird, die eingerichtet ist zum additiven Fertigen eines Bauteils aus einem Pulvermaterial, wobei die Fertigungseinrichtung einen Bauort, insbesondere eine Bauplattform, eingerichtet zum additiven, insbesondere schichtweisen Aufbauen eines Bauteils aus dem Pulvermaterial an dem Bauort, sowie eine optische Aufnahmeeinrichtung aufweist, wobei die optische Aufnahmeeinrichtung eingerichtet ist, um optische Aufnahmen des Bauorts, insbesondere einer Arbeitspulverschicht des Pulvermaterials an dem Bauort, anzufertigen, wobei die Fertigungseinrichtung außerdem eine Steuereinrichtung aufweist, die eingerichtet ist, um wenigstens eine durch die optische Aufnahmeeinrichtung aufgenommene optische Aufnahme einer Arbeitspulverschicht an dem Bauort lokal auszuwerten, und um die Arbeitspulverschicht anhand der lokalen Auswertung der wenigstens einen optischen Aufnahme auf lokale Beschichtungsfehler zu untersuchen. Das Pulvermaterial liegt an dem Bauort insbesondere in Form eines Pulverbetts vor. In Zusammenhang mit der Fertigungseinrichtung ergeben sich insbesondere die Vorteile, die bereits in Zusammenhang mit dem Verfahren erläutert wurden.

Die Fertigungseinrichtung ist eingerichtet zur Durchführung des erfindungsgemäßen Verfahrens oder einer der zuvor beschriebenen Ausführungsformen des Verfahrens.

Die Fertigungseinrichtung weist bevorzugt eine lokal ausrichtbare Energiequelle, insbesondere Strahlungsquelle, auf, die eingerichtet und angeordnet ist, um lokal an dem Bauort, insbesondere auf der Bauplattform, Pulvermaterial zu einer Schicht des zu bildenden Bauteils zu verbinden, insbesondere zu schmelzen. Hierbei kann es sich insbesondere um eine Laserstrahleinrichtung, eine Elektronenstrahleinrichtung, eine Plasmaeinrichtung oder dergleichen handeln.

Die Erfindung wird im Folgenden anhand der Zeichnung näher erläutert. Dabei zeigen:

Figur 1     eine schematische Darstellung eines Ausführungsbeispiels einer Fertigungseinrichtung, und

Figur 2     eine schematische Darstellung einer Ausführungsform eines Verfahrens zum Betreiben der Fertigungseinrichtung gemäß Figur 1.

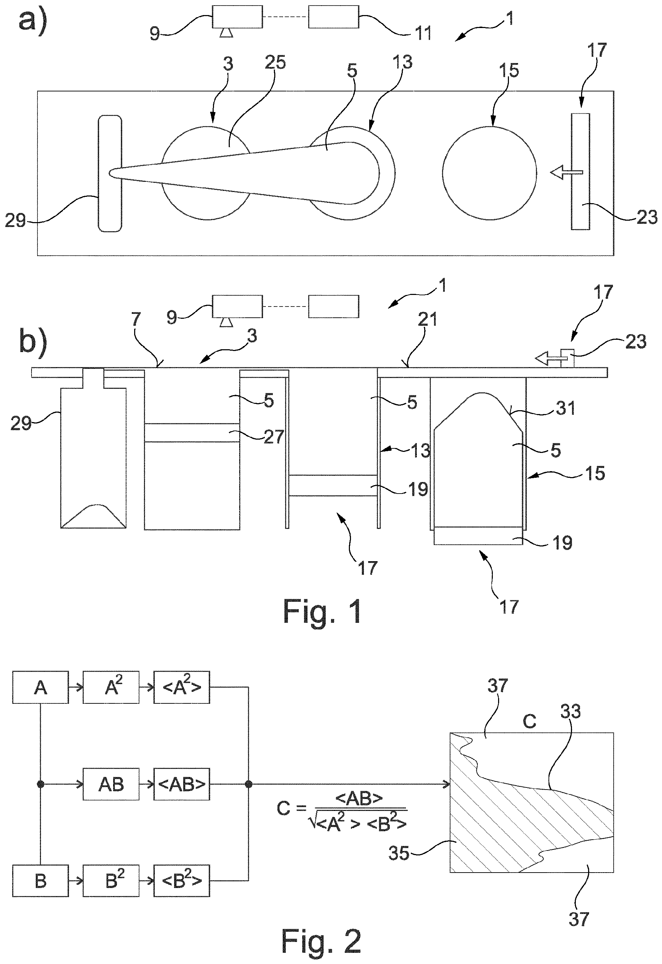

**Fig. 1** zeigt bei a) eine Draufsicht auf ein Ausführungsbeispiel einer pulverbettbasierten Fertigungseinrichtung 1 sowie bei b) eine Seitenansicht der Fertigungseinrichtung 1. Die Fertigungseinrichtung 1 ist eingerichtet zum additiven, insbesondere generativen Fertigen eines Bauteils aus einem Pulvermaterial 5. Sie weist einen Bauort 3 auf, der eingerichtet ist, um an dem Bauort 3 schichtweise ein Bauteil aus dem in Form eines Pulverbetts vorliegenden Pulvermaterial 5 aufzubauen, wobei insbesondere eine Arbeitspulverschicht 7 an dem Bauort 3 erzeugbar ist. Die Fertigungseinrichtung 1 weist außerdem eine optische Aufnahmeeinrichtung 9 auf, vorzugsweise eine Kamera, die eingerichtet ist, um optische Aufnahmen des Bauorts 3 und insbesondere der Arbeitspulverschicht 7 anzufertigen. Weiterhin weist die Fertigungseinrichtung 1 eine Steuereinrichtung 11 auf, die mit der optischen Aufnahmeeinrichtung 9 wirkverbunden oder in die optische Aufnahmeeinrichtung 9 integriert und eingerichtet ist, um wenigstens eine durch die optische Aufnahmeeinrichtung 9 angefertigte optische Aufnahme der Arbeitspulverschicht 7 lokal auszuwerten, und um die Arbeitspulverschicht 7 anhand der lokalen Auswertung der optischen Aufnahme auf lokale Beschichtungsfehler zu untersuchen. Somit können lokale Beschichtungsfehler in oder auf der Arbeitspulverschicht 7 schnell, vorzugsweise automatisch und sicher erkannt werden.

Die Fertigungseinrichtung 1 weist wenigstens einen Speisebehälter auf, hier einen ersten Speisebehälter 13 und einen zweiten Speisebehälter 15, wobei mittels eines Fördermechanismus 17 Pulvermaterial 5 aus zumindest einem der Speisebehälter 13, 15 an den Bauort 3 förderbar ist. Der Fördermechanismus 17 umfasst in den Speisebehältern 13, 15 jeweils einen hubbeweglich verlagerbaren Hubkolben 19, mithilfe dessen das Pulvermaterial 5 in dem jeweiligen Speisebehälter 13, 15 nach oben auf Höhe einer Arbeitsbühne 21 der Fertigungseinrichtung 1 förderbar ist. Der Fördermechanismus 17 umfasst außerdem einen Pulverschieber 23, mit dem das Pulvermaterial 5 auf der Arbeitsbühne 21 von zumindest einem der Speisebehälter 13, 15 zu dem Bauort 3, insbesondere auf eine Bauplattform 25, förderbar ist. Das Pulvermaterial 5 wird in Form der Arbeitspulverschicht 7 schichtweise an dem Bauort 3 aufgetragen und durch eine nicht dargestellte Energiequelle, insbesondere Strahlungsquelle, lokal verfestigt, wodurch ein Bauteil schichtweise aufgebaut wird. Um dies zu ermöglichen, wird ein Arbeitskolben 27 an dem Bauort 3 schrittweise, insbesondere ebenenweise, abgesenkt, sodass nach dem Verfestigen von Pulvermaterial 5 innerhalb einer Arbeitspulverschicht 7 nach Absenken des Arbeitskolbens 27 um den Abstand einer Bauebene eine neue Arbeitspulverschicht 7 an dem Bauort 3 aufgetragen werden kann.

Dargestellt ist auch noch ein Überlaufbehälter 29, in den überschüssiges Pulvermaterial 5 durch den Fördermechanismus 17, insbesondere den Pulverschieber 23, gefördert werden kann.

Beschichtungsfehler der Arbeitspulverschicht 7 können während der Herstellung eines Bauteils insbesondere aufgrund von Volumenschrumpfung in einer zuvor erschmolzenen Arbeitspulverschicht 7, durch in die Ebene der neu zu bildenden Arbeitspulverschicht 7 hochstehende Kanten von aufgeschmolzenem Pulvermaterial, durch Schmauchpartikel, oder durch Metallspritzer entstehen. Beschichtungsfehler können aber auch initial bei einem ersten Auftragen der Arbeitspulverschicht 7 zu Beginn der Fertigung eines Bauteils vorkommen, insbesondere aufgrund einer ungeeigneten geometrischen Verteilung des Pulvermaterials 5 in den Speisebehältern 13, 15. Figur 1b) zeigt schematisch, dass hier der erste Pulverbehälter 13 zum additiven Fertigen eines Bauteils verwendet wird. Der zweite Speisebehälter 15 wird dagegen nicht verwendet. Dieser ist vielmehr frisch mit neuem Pulvermaterial 5 beschickt. Dabei weist hier eine Deckschicht 31 des Pulvermaterials 5 eine von einer ebenen Topografie abweichende Topografie, insbesondere die Topografie eines Schüttkegels, auf. Wird nun ein Transport von Pulvermaterial 5 aus dem zweiten Speisebehälter 15 an den Bauort 3 begonnen, wird zunächst die Arbeitspulverschicht 7 nur unvollständig erstellt, beziehungsweise es erfolgt eine unvollständige Beschichtung des Bauorts 3 mit Pulvermaterial 5, wegen der kegelförmigen Topografie der Deckschicht 31. Diese muss daher vor dem Beginn des Fertigens eines Bauteils an eine vorbestimmte Soll-Topografie, insbesondere eine ebene Topografie - wie dies für den ersten Speisebehälter 13 dargestellt ist - angenähert werden, bevor ein Bauteil defektfrei aufgebaut werden kann.

Mit der Fertigungseinrichtung 1 und dem hier vorgeschlagenen Verfahren ist es sowohl möglich, anhand von festgestellten Beschichtungsfehlern in der Arbeitspulverschicht 5 auf eine Topografie der Deckschicht 31 zu schließen, als auch die Arbeitspulverschicht 7 im laufenden Betrieb der Fertigungseinrichtung 1 beim schichtweisen Aufbau eines Bauteils auf Beschichtungsfehler zu untersuchen.

Ein lokaler Beschichtungsfehler, auf den die Arbeitspulverschicht 7 untersucht wird, ist dabei bevorzugt ausgewählt aus einer Gruppe, bestehend aus einem mangelbeschichteten Bereich, einem unbeschichteten Bereich, einem ungleichmäßig beschichteten Bereich, und einer Abrisskante.

Die optische Aufnahme wird durch die optische Aufnahmeeinrichtung 9 mit einer Auflösung erstellt, die im Verhältnis zu einer mittleren Pulverkorngröße des Pulvermaterials 5 so gewählt wird, dass Helligkeitsvariationen in einzelnen Pixeln der optischen Aufnahme aufgrund lokal verschiedener Anordnung der Pulverkörper feststellbar sind.

Im Rahmen des mit der Fertigungseinrichtung 1 durchführbaren Verfahrens wird wenigstens eine optische Aufnahme der Arbeitspulverschicht 7 an dem Bauort 3 angefertigt, wobei diese wenigstens eine optische Aufnahme lokal ausgewertet wird, wobei die Arbeitspulverschicht 7 anhand der Auswertung der optischen Aufnahme auf lokale Beschichtungsfehler untersucht wird.

Vorzugsweise wird wenigstens eine erste optische Aufnahme einer ersten Arbeitspulverschicht 7 mit einer zweiten optischen Aufnahme einer zweiten, vorhergehenden Arbeitspulverschicht 7 - aus einem vorhergehenden Bauschritt - verglichen, wobei die erste Arbeitspulverschicht 7 anhand des Vergleichs der ersten optischen Aufnahme mit der zweiten optischen Aufnahme auf lokale Beschichtungsfehler untersucht wird.

Erfindungsgemäß wird dabei ein Beschichtungsfehler lokal dort detektiert, wo ein Unterschied zwischen der ersten optischen Aufnahme und der zweiten optischen Aufnahme kleiner als ein vorbestimmter Grenzunterschied oder nicht vorhanden ist, und/oder

wird die erste optische Aufnahme - insbesondere lokal - mit der zweiten optischen Aufnahme korreliert, wobei ein Korrelationsbild erzeugt wird, wobei das Korrelationsbild auf lokale Beschichtungsfehler untersucht wird.

**Fig. 2** zeigt eine schematische Darstellung einer Ausführungsform des Verfahrens. Dabei wird bei dieser Ausführungsform eine erste optische Aufnahme A einer ersten Arbeitspulverschicht 7 mit einer zweiten optischen Aufnahme B einer zweiten, vorzugsweise unmittelbar vorhergehenden Arbeitspulverschicht 7 korreliert, indem die erste optische Aufnahme A und die zweite optische Aufnahme B pixelweise miteinander multipliziert werden, wobei ein Multiplikationsbild AB erhalten wird. Die erste optische Aufnahme A wird pixelweise quadriert, woraus ein erstes Potenzbild $A^2$ erhalten wird. Die zweite optische Aufnahme B wird ebenfalls pixelweise quadriert, woraus ein zweites Potenzbild $B^2$ erhalten wird. Das Multiplikationsbild AB, das erste Potenzbild $A^2$ und das zweite Potenzbild $B^2$ werden lokal gemittelt, woraus zum Ersten ein erstes gemitteltes Potenzbild $<A^2>$, zum Zweiten ein gemitteltes zweites Potenzbild $<B^2>$ und zum Dritten ein gemitteltes Multiplikationsbild $<AB>$ erhalten werden.

Ein Korrelationsbild C wird dann erhalten, indem das gemittelte Multiplikationsbild $<AB>$ dividiert wird durch die Quadratwurzel aus dem Produkt des ersten gemittelten Potenzbildes $<A^2>$ mit dem zweiten gemittelten Potenzbild $<B^2>$, insbesondere gemäß Gleichung (1).

Fehlerfrei neu beschichtete Bereiche der neuen Arbeitspulverschicht 7 weisen in dem Korrelationsbild C niedrigere Korrelationswerte auf als mangelbeschichtete oder unbeschichtete Bereiche, die höhere Korrelationswerte, insbesondere nahe 1, aufweisen. Bei dem hier dargestellten Beispiel des Korrelationsbildes C ist klar eine Abrisskante 33 zu erkennen, die einen defektfreien neu beschichteten Bereich 35 von unbeschichteten Bereichen 37 trennt.

Werden Beschichtungsfehler detektiert, werden im Rahmen des Verfahrens bevorzugt Maßnahmen getroffen, um die Beschichtungsfehler auszugleichen oder die Ursachen der Beschichtungsfehler zu beseitigen. Insbesondere können Maßnahmen eingeleitet werden, um die Topografie der Deckschicht 31 an die vorherbestimmt Soll-Topografie anzunähern, insbesondere durch geeignetes Betätigen des Fördermechanismus 17. Auch können beim Fertigen eines Bauteils Maßnahmen getroffen werden, um Beschichtungsfehler in der Arbeitspulverschicht 7 im laufenden Betrieb zu beseitigen, beispielsweise durch Nachbeschichten oder Neubeschichten.

**Patentansprüche**

1. Verfahren zum Betreiben einer pulverbettbasierten Fertigungseinrichtung (1) zum additiven Fertigen eines Bauteils aus einem Pulvermaterial (5), wobei

- eine optische Aufnahme einer Arbeitspulverschicht (7) eines Pulvermaterials (5) an einem Bauort (3) der Fertigungseinrichtung (1) angefertigt wird, wobei
- die wenigstens eine optische Aufnahme lokal ausgewertet wird, wobei
- die Arbeitspulverschicht (7) anhand der Auswertung der wenigstens einen optischen Aufnahme auf lokale Beschichtungsfehler untersucht wird, wobei
- die wenigstens eine optische Aufnahme mit einer Auflösung erstellt wird, die im Verhältnis zu einer mittleren Pulverkorngröße des Pulvermaterials (5) so gewählt wird, dass Helligkeitsvariationen in einzelnen Pixeln der optischen Aufnahme aufgrund lokal verschiedener Anordnung von Pulverkörnern des Pulvermaterials (5) feststellbar sind, wobei
- dass eine erste optische Aufnahme (A) einer ersten Arbeitspulverschicht (7) und eine zweite optische Aufnahme (B) einer zweiten, vorhergehenden Arbeitspulverschicht (7) angefertigt werden,

**dadurch gekennzeichnet,**

- **dass** ein Beschichtungsfehler lokal dort detektiert wird, wo ein Unterschied zwischen der ersten optischen Aufnahme (A) und der zweiten optischen Aufnahme (B) kleiner als ein vorbestimmter Grenzunterschied oder nicht vorhanden ist, und/oder
- **dass** die erste optische Aufnahme (A) mit der zweiten optischen Aufnahme (B) korreliert wird, wobei ein Korrelationsbild (C) erzeugt wird, wobei das Korrelationsbild (C) auf lokale Beschichtungsfehler untersucht wird.

2. Verfahren nach Anspruch 1, **dadurch gekennzeichnet, dass** wenigstens ein lokaler Beschichtungsfehler, auf den die Arbeitspulverschicht (7) untersucht wird, ausgewählt ist aus einer Gruppe, bestehend aus einem mangelbeschichteten Bereich, einem unbeschichteten Bereich, einem ungleichmäßig beschichteten Bereich, und einer Abrisskante.

3. Verfahren nach einem der vorhergehenden Ansprüche, **dadurch gekennzeichnet, dass** anhand eines festgestellten Beschichtungsfehlers vor einem Beginn einer Fertigung eines Bauteils auf eine Abweichung von einer ebenen Topografie einer Deckschicht (31) des Pulvermaterials (5) in einem Speisebehälter (13,15) geschlossen wird.

4. Verfahren nach einem der vorhergehenden Ansprüche, **dadurch gekennzeichnet, dass** die Arbeitspulverschicht (7) im laufenden Betrieb der Fertigungseinrichtung (1) beim schichtweisen Aufbau eines Bauteils auf Beschichtungsfehler untersucht wird.

5. Verfahren nach einem der vorhergehenden Ansprüche, **dadurch gekennzeichnet, dass** die erste optische Aufnahme (A) mit der zweiten optischen Aufnahme (B) verglichen wird, wobei die erste Arbeitspulverschicht (7) anhand des Vergleichs der ersten optischen Aufnahme (A) mit der zweiten optischen Aufnahme (B) auf lokale Beschichtungsfehler untersucht wird.

6. Verfahren nach einem der vorhergehenden Ansprüche, **dadurch gekennzeichnet, dass** die erste optische Aufnahme (A) mit der zweiten optischen Aufnahme (B) korreliert wird, indem

a) die erste optische Aufnahme (A) und die zweite optische Aufnahme (B) pixelweise miteinander multipliziert werden, wobei ein Multiplikationsbild (AB) erhalten wird;
b) die erste optische Aufnahme (A) pixelweise quadriert wird, woraus ein erstes Potenzbild ($A^2$) erhalten wird;
c) die zweite optische Aufnahme (B) pixelweise quadriert wird, woraus ein zweites Potenzbild ($B^2$) erhalten wird;
d) das Multiplikationsbild (AB), das erste Potenzbild ($A^2$) und das zweite Potenzbild ($B^2$) lokal gemittelt werden, sodass ein gemitteltes Multiplikationsbild (<AB>) ein gemitteltes erstes Potenzbild (<$A^2$>), und ein gemitteltes zweites Potenzbild (<$B^2$>) erhalten werden, wobei
e) ein Korrelationsbild (C) durch Division des gemittelten Multiplikationsbilds (<AB>) durch die Quadratwurzel aus dem Produkt des gemittelten ersten Potenzbilds (<$A^2$>) mit dem gemittelten zweiten Potenzbild (<$B^2$>) erhalten wird.

7. Fertigungseinrichtung (1) zum additiven Fertigen eines Bauteils aus einem Pulvermaterial (5), mit

- einem Bauort (3), der eingerichtet ist zum additiven Aufbauen eines Bauteils aus dem Pulvermaterial (5) an dem Bauort (3);
- einer optischen Aufnahmeeinrichtung (9), eingerichtet zum Anfertigen optischer Aufnahmen des Bauorts (3), und mit

- einer Steuereinrichtung (11), die eingerichtet ist, um wenigstens eine durch die optische Aufnahmeeinrichtung (9) angefertigte optische Aufnahme einer Arbeitspulverschicht (7) des Pulvermaterials (5) an dem Bauort (3) lokal auszuwerten und die Arbeitspulverschicht (7) anhand der lokalen Auswertung der wenigstens einen optischen Aufnahme auf lokale Beschichtungsfehler zu untersuchen, wobei
- die Fertigungseinrichtung eingerichtet ist zur Durchführung des Verfahrens nach einem der Ansprüche 1 bis 6.

**Claims**

1. A method for operating a powder bed-based manufacturing device (1) for additive manufacturing of a component from a powder material (5), wherein

   - an optical recording of a working powder layer (7) of a powder material (5) is made at a construction site (3) of the manufacturing device (1), wherein
   - the at least one optical recording is evaluated locally, wherein
   - the working powder layer (7) is examined for local coating defects using the evaluation of the at least one optical recording, wherein
   - the at least one optical recording is created with a resolution that is selected in relation to an average powder grain size of the powder material (5) such that brightness variations in individual pixels of the optical recording due to locally different arrangements of powder grains of the powder material (5) can be determined, wherein
   - a first optical recording (A) of a first working powder layer (7) and a second optical recording (B) of a second, preceding working powder layer (7) are made,

   **characterised in**

   - **that** a coating defect is locally detected where a difference between the first optical recording (A) and the second optical recording (B) is less than a predetermined limit difference or is non-existent, and/or
   - **that** the first optical recording (A) is correlated with the second optical recording (B), wherein a correlation image (C) is generated, wherein the correlation image (C) is examined for local coating defects.

2. The method according to claim 1, **characterised in that** at least one local coating defect, for which the working powder layer (7) is examined, is selected from a group consisting of an insufficiently coated region, an uncoated region, an irregularly coated region, and a tear-off edge.

3. The method according to any one of the preceding claims, **characterised in that** a deviation from a planar topography of a cover layer (31) of the powder material (5) in a feed container (13, 15) is concluded on the basis of a detected coating defect before the start of production of a component.

4. The method according to any one of the preceding claims, **characterised in that** the working powder layer (7) is examined for coating defects during ongoing operation of the manufacturing device (1) when a component is built up in layers.

5. The method according to any one of the preceding claims, **characterised in that** the first optical recording (A) is compared with the second optical recording (B), wherein the first working powder layer (7) is examined for local coating defects on the basis of the comparison of the first optical recording (A) with the second optical recording (B).

6. The method according to any one of the preceding claims, **characterised in that** the first optical recording (A) is correlated with the second optical recording (B), by

   a) the first optical recording (A) and the second optical recording (B) being multiplied with one another pixel by pixel, wherein a multiplication image (AB) is obtained;
   b) the first optical recording (A) is squared pixel by pixel, from which a first power image ($A^2$) is obtained;
   c) the second optical recording (B) is squared pixel by pixel, from which a second power image ($B^2$) is obtained;
   d) the multiplication image (AB), the first power image ($A^2$) and the second power image ($B^2$) are locally averaged, so that an averaged multiplication image (<AB>), an averaged first power image (<$A^2$>), and an averaged second power image (<$B^2$>) are obtained, wherein
   e) a correlation image (C) is obtained by dividing the averaged multiplication image (<AB>) by the square root of the product of the averaged first power image (<$A^2$>) with the averaged second power image (<$B^2$>).

7. A manufacturing device (1) for the additive manufacturing of a component from a powder material (5), having

 - a construction site (3) configured for the additive construction of a component from the powder material (5) at the construction site (3);
 - an optical recording device (9) configured for making optical recordings of the construction site (3), and having
 - a control device (11) configured to locally evaluate at least one optical recording of a working powder layer (7) of the powder material (5) made by the optical recording device (9) at the construction site (3) and to examine the working powder layer (7) for local coating defects on the basis of the local evaluation of the at least one optical recording, wherein
 - the manufacturing device is configured for performing the method according to any one of claims 1 to 6.

**Revendications**

1. Procédé pour faire fonctionner un dispositif de fabrication (1) à base de lit pulvérulent pour la fabrication additive d'un composant à partir d'un matériau pulvérulent (5),

 - un enregistrement optique d'une couche de poudre de travail (7) d'un matériau pulvérulent (5) étant réalisé sur un lieu de construction (3) du dispositif de fabrication (1),
 - l'au moins un enregistrement optique étant évalué localement,
 - la couche de poudre de travail (7) étant examinée pour détecter des défauts de revêtement locaux sur la base de l'évaluation de l'au moins un enregistrement optique,
 - l'au moins un enregistrement optique étant réalisé avec une résolution qui est choisie par rapport à une grosseur moyenne des grains de poudre du matériau pulvérulent (5) de façon que des variations de luminosité dans des pixels individuels de l'enregistrement optique puissent être constatées en raison d'une disposition localement différente des grains de poudre du matériau pulvérulent (5),
 - un premier enregistrement optique (A) d'une première couche de poudre de travail (7) et un second enregistrement optique (B) d'une seconde couche de poudre de travail (7) précédente étant réalisés,

 **caractérisé en ce que**

 - un défaut de revêtement est détecté localement là où une différence entre le premier enregistrement optique (A) et le second enregistrement optique (B) est inférieure à une différence limite prédéfinie ou inexistante, et/ou
 - **en ce que** le premier enregistrement optique (A) est corrélé avec le second enregistrement optique (B), une image de corrélation (C) étant générée, l'image de corrélation (C) étant examinée pour détecter des défauts de revêtement locaux.

2. Procédé selon la revendication 1, **caractérisé en ce qu'**au moins un défaut de revêtement local, pour lequel la couche de poudre de travail (7) est examinée, est choisi dans un groupe constitué d'une zone insuffisamment revêtue, d'une zone non revêtue, d'une zone revêtue de manière irrégulière et d'un bord de déchirement.

3. Procédé selon l'une quelconque des revendications précédentes, **caractérisé en ce qu'**un écart par rapport à une topographie plane d'une couche de couverture (31) du matériau pulvérulent (5) dans un récipient d'alimentation (13, 15) est déterminé en fonction d'un défaut de revêtement détecté avant le début de la fabrication d'un composant.

4. Procédé selon l'une quelconque des revendications précédentes, **caractérisé en ce que** la couche de poudre de travail (7) est examinée pour des défauts de revêtement pendant le fonctionnement continu du dispositif de fabrication (1) lorsqu'un composant est construit en couches.

5. Procédé selon l'une quelconque des revendications précédentes, **caractérisé en ce que** le premier enregistrement optique (A) est comparé au second enregistrement optique (B), la première couche de poudre de travail (7) étant examinée pour des défauts de revêtement locaux sur la base de la comparaison du premier enregistrement optique (A) avec le second enregistrement optique (B).

6. Procédé selon l'une quelconque des revendications précédentes, **caractérisé en ce que** le premier enregistrement optique (A) est mis en corrélation avec le second enregistrement optique (B) en

 a) multipliant le premier enregistrement optique (A) par le second enregistrement optique (B) pixel par pixel, une image de multiplication (AB) étant obtenue ;

b) le premier enregistrement optique (A) est mis au carré pixel par pixel afin d'obtenir une première image de puissance ($A^2$) ;

c) le second enregistrement optique (B) est mis au carré pixel par pixel afin d'obtenir une seconde image de puissance ($B^2$) ;

d) l'image de multiplication (AB), la première image de puissance ($A^2$) et la seconde image de puissance ($B^2$) étant moyennées localement de façon à obtenir une image de multiplication moyennée (<AB>), une première image de puissance moyennée (<$A^2$>) et une seconde image de puissance moyennée (<$B^2$>),

e) une image de corrélation (C) étant obtenue en divisant l'image de multiplication moyennée (<AB>) par la racine carrée du produit de la première image de puissance moyennée (<$A^2$>) avec la seconde image de puissance moyennée (<$B^2$>).

7.  Dispositif de fabrication (1) pour la fabrication additive d'une pièce à partir d'un matériau pulvérulent (5), avec

- un lieu de construction (3) conçu pour la construction additive d'un composant à partir du matériau pulvérulent (5) sur le lieu de construction (3) ;

- un dispositif d'enregistrement optique (9) conçu pour effectuer des enregistrements optiques du lieu de construction (3) et avec

- un dispositif de commande (11) conçu pour évaluer localement et à l'aide du dispositif d'enregistrement optique (9) au moins un enregistrement optique d'une couche de poudre de travail (7) du matériau pulvérulent (5) sur le lieu de construction (3) et pour examiner la couche de poudre de travail (7) sur la base de l'évaluation locale de l'au moins un enregistrement optique pour détecter les défauts de revêtement locaux

- le dispositif de fabrication étant conçu pour mettre en oeuvre le procédé selon l'une quelconque des revendications 1 à 6.

a)

b)

Fig. 1

$$C = \frac{<AB>}{\sqrt{<A^2><B^2>}}$$

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015177158 A
- WO 2017085468 A1